# EUROPEAN PATENT APPLICATION

(11) **EP 4 485 855 A1**
(43) Date of publication of application: **01.01.2025**
(21) Application number: 23216307.1
(22) Date of filing: 13.12.2023
(51) Int. Cl.: H04L 9/40, H04W 12/102

(54) **METHOD, APPARATUS AND COMPUTER READABLE STORAGE MEDIUM FOR PROCESSING DATA OF A SECURITY PROTOCOL**

(30) Priority: 30.06.2023 US 202318344928
(71) Applicant: INTEL Corporation, Santa Clara, CA 95054 (US)
(72) Inventor: PERI, Surekha, Austin 78759 (US); AIMANGALA NAGARAJA SETTY, Ravikumar, 56003 Bangalore (IN); GUNASEKHARAN, Sankaradithyan, Austin 78745 (US)
(74) Representative: 2SPL Patentanwälte PartG mbB

(57) **Abstract**

A method for processing data of a security protocol comprises receiving a data packet associated to the security protocol over a network; determining, whether the data packet belongs to a group of post fragmented, PF, packets; processing the content of the data packet according to the security protocol if the data packet does not belong to the group of post fragmented packets; and forwarding the data packet if the data packet does belong to the group of post fragmented packets.

## Description

### Field

Examples relate to a method, an apparatus and computer readable storage medium for processing data of a security protocol.

### Background

Security protocols such as IPsec are employed in the networks to provide data security. Such traffic is also susceptible to post fragmentation in the network, owing to the header expansion. Post fragmentation (PF) means that an IP datagram or a message is subject to fragmentation after the security transform so that it is split into multiple data packets. This is also called as outer fragmentation. Even though there are several mechanisms, such as path Maximum Transfer Unit discovery (pMTUd), co-operative MTU etc. to limit the amount of post fragmentation traffic in the network, post fragmentation does occur. One example where post fragmentation is likely is multi operator networks, where different segments of the network are managed independently, e.g., on the backhaul/midhaul of Radio Access Networks (RAN) or edge appliances.

### Brief description of the Figures

Some examples of apparatuses and/or methods will be described in the following by way of example only, and with reference to the accompanying figures, in which
Fig. 1 illustrates a flowchart of an example of a method for processing data of a security protocol;
Fig. 2 illustrates a schematic view of a concept to implement a method for processing data of a security protocol;
Fig. 3 illustrates a schematic view of a concept to implement an example of a method for processing data of a security protocol with Anti Replay Windows;
Fig. 4 illustrates a schematic view of multiple protocol layers involved in processing of an security protocol;
Fig. 5 illustrates a flowchart of an example of a method for processing data of a security protocol within a dedicated apparatus;
Fig. 6 illustrates a flowchart of an example of a method for processing data of a security protocol within an apparatus cooperating with the apparatus illustrated in Fig. 5; and
Fig. 7 schematically illustrates an apparatus for processing data of a security protocol.

### Detailed Description

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

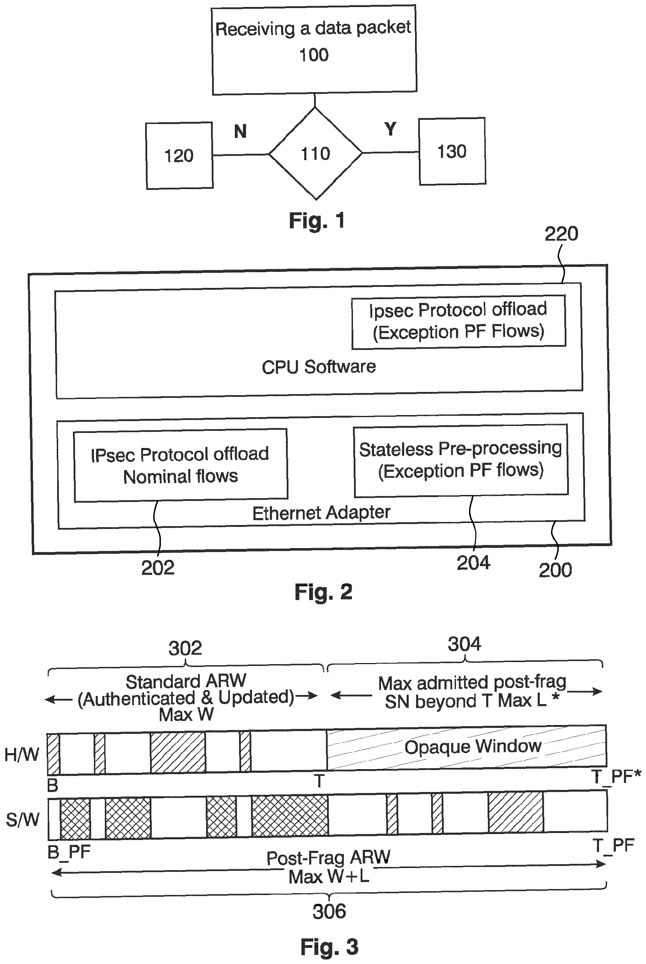

Fig. 1 illustrates a flowchart of an example of a method for processing data of a security protocol.

The method comprises receiving a data packet associated to the security protocol 100. The data packet may be received over a network. It is determined whether the data packet belongs to a group of Post Fragmented (PF) packets 110 and if not, the content of the data packet is processed according to the security protocol 120. If the data packet does belong to the group of post fragmented packets, it is forwarded 130, for example for processing by another entity.

Said method allows, for example, splitting the stateful processing of post-fragmented and non-post fragmented traffic of security protocols. Said splitting enables, for example, processing the data packets (traffic) of the nominal traffic (non- PF) in-line in a Network Interface Card (NIC). Security protocols offloaded to in-line processing may, for example, be IPsec, TLS or DTLS. On the other hand, the post fragmented traffic may be handled as an exception path by a further entity or in software. This approach provides for processing of post-fragmented and non-post fragmented traffic of security protocols with minimal hardware enhancements of existing solutions like, e.g. NICs and without the need for expensive additional blocks such as IP re-assembly offload. Those would otherwise be needed to reassemble the PF data packets before these can undergo processing according to the security protocol, such as for example decryption or generation of a hash value. Hence, the security protocol may implement encryption, authentication, or both.

Conventional NICs may support in-line (between the network and the compute processor) algorithmic offload to accelerate networking workloads. Continued increase in bandwidths, and workload demands are pushing the need for higher acceleration to facilitate increased compute resource availability for value added workloads. 5G deployments and emerging 6G are, for example, huge motivators for the need for a full security protocol termination in-line within the NIC.

The presence of post-fragmented (PF) traffic poses an additional challenge for such an acceleration, since PF traffic needs to be reassembled before IPsec processing, and the full protocol offload requires the support of stateful services such as anti-replay, where both categories of traffic (post fragmented and non-post fragmented) needing a coherent view of the state of an Anti- Replay Window (ARW).

Anti-replay is a security mechanism used in network communication protocols to prevent attackers from intercepting and replaying legitimate network traffic. The mechanism works by assigning a unique identifier (e.g. a timestamp or serial number) to each packet sent by a sender, and the receiver keeps track of the identifiers it has seen to ensure that it only accepts each packet once. In the context of network security, replay attacks are a type of network attack in which an attacker intercepts a legitimate network communication, records it, and later sends it again to the receiver in an attempt to impersonate the sender. This can be used to gain unauthorized access to a network or to perform other malicious actions, such as compute resource wastage. Anti-replay mechanisms can be implemented at various layers of the network stack, including the application layer, transport layer, and network layer. For example, the Secure Real-time Transport Protocol (SRTP) uses an anti-replay mechanism at the transport layer to protect against replay attacks. The anti-replay mechanism typically involves adding a sequence number or timestamp to each packet sent by the sender, and the receiver maintains a list of the sequence numbers or timestamps it has seen. When a packet is received, the receiver checks whether its sequence number or timestamp has already been seen. If it has, the packet is discarded as a potential replay attack. If it is a new sequence number or timestamp, the packet is accepted as legitimate and processed further.

For TCP communication, Anti- Replay Windows may be used with to "Additive Increase, Multiplicative Decrease, and Random Early Detection (AIMD) for TCP Congestion Control", resulting in the size of the ARW varying over time. AIMD is a modification to the standard TCP congestion control algorithm that aims to improve the network performance by reducing congestion and increasing throughput. AIMD works by increasing the sender's congestion window (cwnd) linearly until a packet loss is detected, then decreasing cwnd multiplicatively by half to reduce congestion. However, the AIMD algorithm can be too aggressive, leading to unnecessary packet drops and lower network performance. As a consequence the size of the ARW is dynamic, too. AIMD may be supplemented by a Random Early Detection (RED) mechanism to reduce congestion before packet loss occurs. The RED mechanism drops packets randomly when the average queue length exceeds a certain threshold. This signals the sender to reduce its transmission rate before the queue becomes full and packet loss occurs.

It is apparent that full in-line protocol offload within a NIC, in the presence of post fragmented traffic, requires complex hardware blocks such as an in-line IP reassembly, associated memory and logic that can be avoided according to the method of Fig. 1.

Other conventional implementations may exhibit in-line stateless offloads for nominal/non-PF traffic, and stateful software implementation for all traffic. Stateless offloads for post fragmented traffic may be achieved through software/look aside acceleration, including software IP reassembly of post-fragmented traffic and re-injecting the traffic into the Ethernet complex for an in-line protocol offload. Another alternative would be a hardware IP reassembly block that can perform the IP reassembly, prior to the in-line security protocol offload. Full protocol offload applicable for controlled environments with end to end (EtE) network ownership and zero incidence of post fragmentation may be another option.

However, a stateless/stateful split results in the software is not only operating for low intensity post fragmentation traffic but for all traffic, which limits the scaling of single SA performance. Recirculating the reassembled datagram after a software reassembly into the in-line NIC incurs excess latency and typically results in ARW, window out of bound drops. Hardware IP reassembly blocks are expensive, place large demands on hardware and have limited scalability. As an example, scaling the total number of simultaneous reassembly sessions, and the size of the reassembled datagrams etc. all the way up to 64kB. In uncontrolled environments, with mixed network ownership, post fragmented traffic is dropped, resulting in potential connectivity black holes.

Fig. 2 illustrates a schematic view of an example of a concept for processing data of a security protocol, split amongst hardware (e.g. a NIC 200) and a software protocol stack running on another entity 220.

The content of data packets not belonging to a group of post fragmented data packets (data packets of a nominal flow) 202 are processed within the NIC 200 according to the security protocol.

If the data packet does belong to the group of post fragmented packets (exception PF flow 204), the data packet is pre-processed within the NIC 200 and eventually forwarded for stateful processing using the further entity 220. In the illustrated embodiment, the further entity 220 is a General Purpose Computing Unit (CPU), running a software stack. In further implementations, the further entity may be any arbitrary hardware or software or a combination of both. For example, the further entity may comprise at least one of a (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems.

Fig. 3 illustrates a schematic view of a concept to implement an example of a method for processing data of a security protocol with Anti Replay Windows.

A Network interface implements a Standard Anti Replay Window 302. The Standard Anti Replay Window 302 is extended by a supplemental ARW 304.

The further entity implements a PF Anti Replay Window 306 used to monitor post fragmented data packets associated to a security protocol.

The Standard Anti Replay Window 302 works according to existing implementations, monitoring replay of data packets to avoid associated attacks. A data packet is dropped, if an identical data packet was already received within the Standard Anti Replay Window 302, irrespective whether it is a post fragmented data packet or not.

The concept illustrated in Figs. 2 and 3 may be viewed as a hierarchical anti replay window scheme.

Both categories of traffic (PF and non PF) exercise independent windows without the need for any shared state coherency.

The total window space is so split into 3 components. In a NIC, a Hardware Window is implemented, comprising a Standard anti-replay window 302 that holds the occupancy bit map for non-post fragmented traffic.

A supplemental window (extension opaque window) holds just the latest post-fragmented SN beyond the leading edge and is a speculative view of the software window size and extent, without visibility into the content. In other words, the data packets belonging to PF traffic are not decrypted by the NIC and the effort to implement the supplemental window is little, since it does not have a complete occupancy bit map for post fragmented traffic but only holds the latest post-fragmented SN beyond the leading edge.

Instead, only the PF Anti Replay Window 306 implemented in software holds the occupancy bit map for post fragmented traffic.

With this approach, post fragmented traffic and non-post fragmented traffic are handled independently using the PF Anti Replay Window 306 by the software and the Standard Anti Replay Window 302 extended by the supplemental ARW 304 in hardware, respectively. Additional filtering of the post-fragments in the hardware may be used. Hence, additional hardware requirements are very little.

Very much like the Standard ARW, the size of the supplemental ARW is variable. The extended ARW used in the NIC is the Standard ARW extended by a supplemental ARW. There exists a maximum allowable size for the standard ARW as well as for the supplemental ARW, which are implementation specific. A resulting maximum length of the combination of the two windows if one of the windows sizes shall be increased is the allowable extended ARW.

Since the window lengths are variable, the supplemental ARW can be increased to include the data packet if a PF data packet arrives that is inside of the allowable extended ARW.

Likewise, a data packet belonging to a group of post fragmented packets will be dropped if the data packet is outside an allowable extended ARW.

If an identical data packet was already received within the extended ARW or within a preceding post fragmented data packet, said data packet may be dropped.

To be compliant with existing management models specifying the standard ARW window size W, the window sizes may optionally be chosen following the subsequent considerations. L shall be the length of the supplemental ARW 304 and L* the maximum allowable length of the supplemental ARW 304. The choice of size of L* and L could, for example, be based on the following factors. L* may be chosen based on the specific deployments' expected post fragmentation. Given a beneficial implementation of the supplemental ARW 304 that is represented by a single SN, the size of L* does not impose additional hardware resource expectations. Further, in well-designed networks, the supplemental ARW 304 is exercised only intermittently and is subjected to limited growth. E.g., pMTU probes result in occasional arrivals of post fragmented data packets and is typically interspersed with the non-post fragmented traffic that does not use the supplemental window.

The supplemental ARW 304 may, however, be exercised/used significantly during route reconfigurations, e.g. when a new path has a lower pMTU. This may results in intermittent bursts of post fragmentated traffic for the duration of a round trip delay. So, L* may be derived as Line rate / (RTT * average packet size in bits), where RTT is the Round Trip Time.

The size of the PF Anti Replay Window 306 of the further entity (e.g. a software stack) can be set to W+L, where L maybe set to W, to meet the IPsec ARW requirements with the assumption of 100% post fragmented traffic.

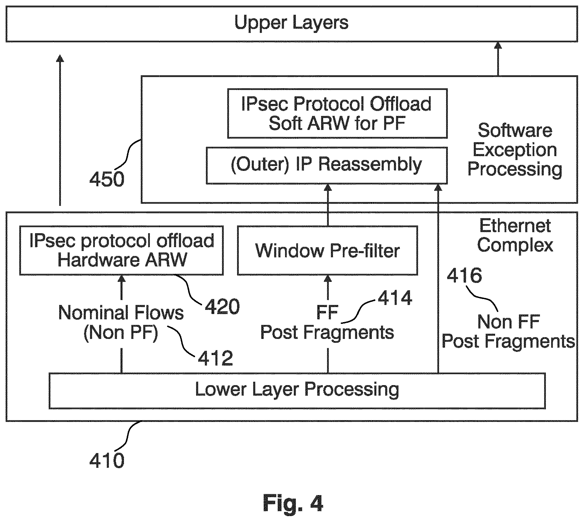

Figs. 4 to 6 jointly illustrate a schematic view of multiple protocol layers involved in processing of an security protocol for the non-limiting example of processing IPsec traffic and for splitting processing between a NIC 410 (hardware) and a software protocol stack 450.

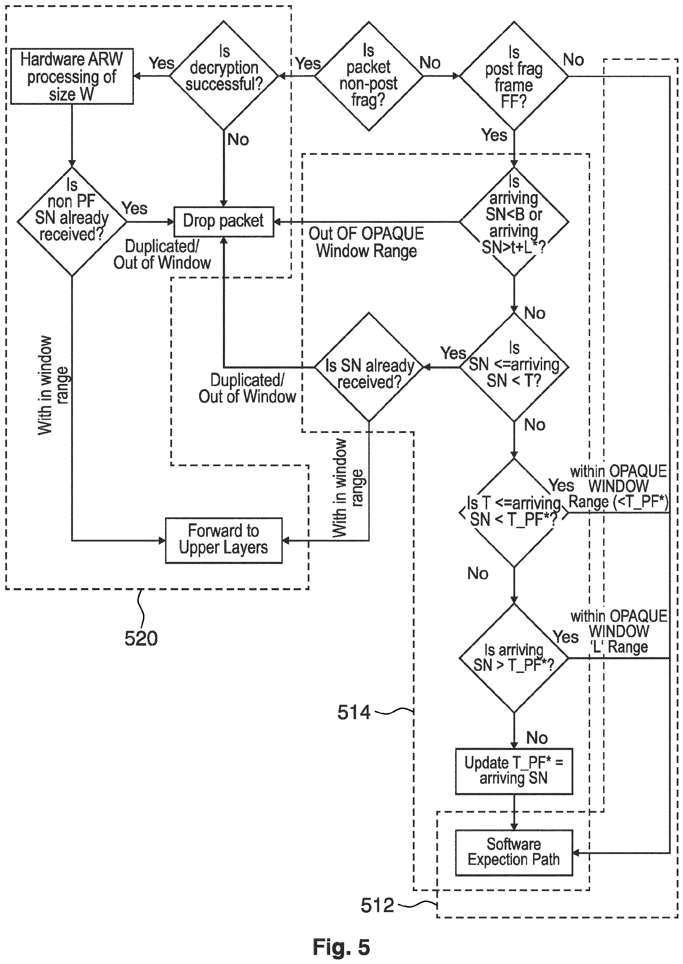

If non-post fragment data packets 412 arrive, standard ARW processing 420, 520 of no- PF data packets is performed, including application of admit/deny conditions and updating ESN as well as forwarding the data packets for upper layer processing. While Fig. 4 illustrates standard ARW 420 processing in a conceptual overview, Fig. 5 illustrates the decisions and actions performed during standard ARW processing 520 by means of a flow chart.

Upon arriving of post fragmented data packets, PF data filtering/processing is performed in the NIC, distinguishing between the first received data packet belonging to a group of post fragmented packets (processing according to sub- flow chart 514) and subsequent data packets belonging to the same group of post fragmented packets (processing according to sub- flow chart 512).

Upon arrival of the first received data packet belonging to a group of post fragmented packets, the following conditions apply.

If the arriving Sequence Number (SN) of the first received data packet fulfills SN < B or SN > T+L*, the data packet is dropped, B denoting the start or bottom of the standard ARW. In case SN > T+L*, the data packet belonging to a group of post fragmented packets is dropped since it is received outside an allowable extended ARW, the extended ARW being the Standard ARW of length T potentially extended by a maximum allowable length of the supplemental ARW.

If the SN is within the standard ARW (B <= arriving SN < T) and if it is not a duplicate SN, the data packed is forwarded to upper layers.

If the SN is within the existing supplemental window, the data packet (T <= arriving SN < T_PF*, T_PF* being the top of the supplemental window) is forwarded.

If the SN is within the maximum allowable length L* of the supplemental ARW 304, the data packet is forwarded and the size of the supplemental ARW 304 (T_PF* < arriving SN, update T_PF* = arriving SN) is increased. In other words, the supplemental ARW is increased to include the data packet if the data packet is inside of the allowable extended ARW.

A subsequent data packet belonging to the same group of post fragmented packets (processing according to flow charts 512) is forwarded into the CPU software stack for IP reassembly and software exception processing.

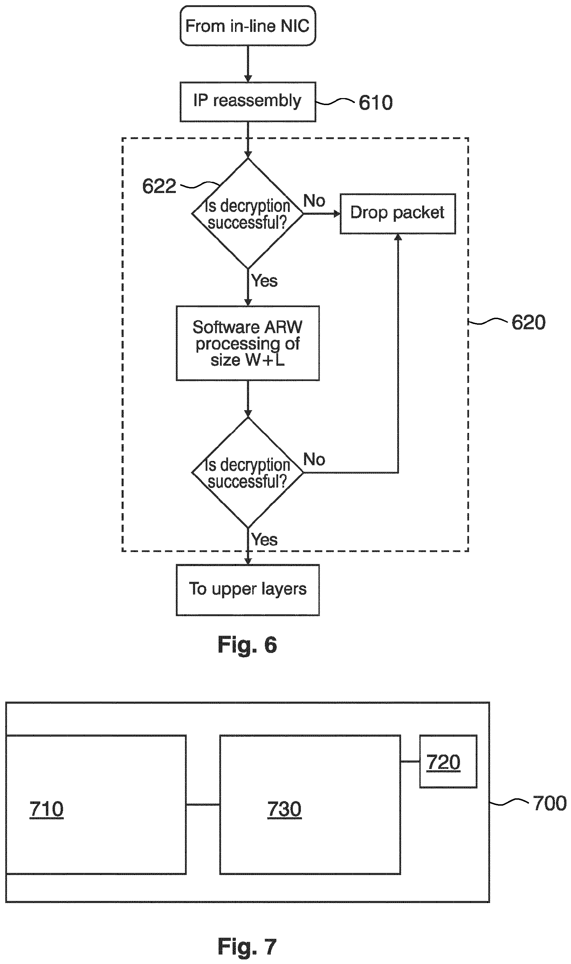

Fig. 6 illustrates a flowchart of an example of a method for processing data of a security protocol and, in particular, processing of PF data packets associated to the IPSec protocol within a software stack.

The data packets belonging to a group of post fragmented packets are undergoing standard lower layer protocol processing, including IP reassembly. Subsequently, decryption and ARW processing 620 is performed.

Decryption 622 may optionally be implemented using further entities to increase performance, such as for example protocol offload using look-aside, accelerated software libraries etc.. After successful decryption, Software ARW processing is performed using Window of size W+L, for example.

Fig. 7 schematically illustrates an apparatus 700 for processing data of a security protocol.

The apparatus 700 comprises interface circuitry 710, memory 720 for storing machine-readable instructions and processing circuitry 730 for executing the machine-readable instructions. When executing the machine-readable instructions, the processing circuitry 730 is configured to receive a data packet associated to the security protocol over a network (e.g. via interface circuitry 710), and to determine, whether the data packet belongs to a group of post fragmented, PF, packets. The processing circuitry 730 process the content of the data packet according to the security protocol if the data packet does not belong to the group of post fragmented packets or forwards the data packet if the data packet does belong to the group of post fragmented packets.

In other words, the examples described herein may be understood to propose a hierarchical scheme with 2 independently operable windows. A first window comprises an ARW, a history buffer of SNs, of authenticated nominal traffic plus a supplemental window (a speculative opaque window) for post fragmented traffic in the in-line NIC. The supplemental window tracks the highest post frag SN admitted for software processing. The supplemental window and pre-processing on the hardware serves as a bridging logic between the two windows, eliminating the need for any shared states or unified view of the ARW. The post fragmented traffic is handled hierarchically, with a first level admission in the in-line NIC and a final admission with window update in the software (using a PF anti replay window), while the nominal, non-PF traffic is handled completely in the in-line NIC.

According to the examples described, each of the hardware/software windows so sees an independent class of traffic - non-post fragmented and post fragmented. It treats the other class of traffic as a gap in arrivals and may - depending on the implementation - tolerate up to 2^32-1 gaps in arrivals or even more. In most networks, post fragmentation is an occasional occurrence, which might result in the ESN prediction on the software ARW to be stale/incorrect. This may optionally be addressed by the hardware generating an event (/interrupt) at the first non-post fragmented SN once there is an increment of at least 2^31 in successfully admitted non-post fragmented sequence numbers. An event may also be generated only every (2^32 - D) sequence numbers, where D are the number of packets that account for the pipeline latency from the hardware ARW to the software ARW. Using 2^31 may simplify the logic. An inverse event may also be designed to address a gap of 2^32-1 sequence numbers in the nominal packets, where > 2^32-1 contiguous post fragmented arrivals occur.

The examples allow to efficiently process PF and non PF traffic, simultaneously allowing to tackle replay attacks. In an replay attack, traffic in the network is replayed as-is by the attacker. Duplication within post fragments is detected since all post fragments are stored in the same history buffer/software window. Duplication within non-post fragments is detected since all non-post fragments are managed in the same history buffer/ hardware window.

Replaying traffic in the network after applying fragmentation only applicable for IPv4 traffic. IPv6 traffic can only be fragmented at the source, i.e., the IPsec originator. If the original non-post fragmented packet is first arriving, and the duplicate is post fragmented, it is detected as part of pre-processing of the post fragmented traffic on the hardware and is dropped.

If the post fragmented traffic arrives before the original unfragmented packet, which can occur under the condition of a genuine network re-configuration resulting in valid duplication where the packet arrives in two different paths, one post fragmented and the other unfragmented will be admitted and submitted to the end point. The condition is no different than genuine duplication that rarely occurs in unsecure/clear networks and is not considered a security risk. This can also occur under the condition of a man-in-the-middle attack that snoops, performs additional processing of creating valid post fragments and arrives at the destination before the original packet is not possible and hence not considered a risk.

In the event of a SN Collision/Partial Replay attack the attacker injects a rogue packet to collide with a future valid packet. A man-in-the-middle eavesdropper would observe the SN of the non-post fragmented traffic, predict a future SN and generates a rogue post frag with that SN, which will be dropped in the IP reassembly logic.

If a man-in-the middle eavesdropper observes the SN of the post frag and generates a rogue non-post frag with a future SN, such a data packet will be dropped in the hardware decryption/authentication.

Considering the previously described potential attacks, the desired system behavior of the examples describe in this document may be observed under certain input traffic stimuli.

An example of a system as described herein has a performance that is not sensitive to replay attacks on nominal traffic. Performance is sensitive only to increased post fragmented traffic.

An example of a system as described herein would drop post fragmented traffic such that the latency between the first fragment and the last fragment is such that frag arrival latency is greater than differential latency between post frag/non post fragments in the system, which again is greater than an ARW out of order latency tolerance (as given by line rate/(window _size*packet size in bits)).

An example of a system as described herein would react to engineered traffic using a PCAP or other traffic generation methods with a targeted packet duplication/replay attack, with the following arrival sequence into the system under test:
If the first arrival is a non-post fragmented packet and the duplicate is a post fragmented packet, only one packet is admitted into the system.
If the first arrival is a post fragmented packet and duplicate is a non-post fragmented packet, both packets are admitted into the system.

The examples described herein may also be characterized to provide nominal support for in-line IPsec protocol offload and no hardware in-line IP reassembly offload while accepting post fragmented traffic.

On a full stack security gateway benchmark, there is a 2x performance improvement from an in-line pre-processing IPsec offload to a full IPsec protocol offload, freeing up the compute resources for higher layer applications to execute customer workloads. This solution allows for a system to accelerate the nominal flows and isolating the additional cost to track the amount of PF encountered in the network.

While providing for the previously mentioned performance and efficiency advantages, the examples described herein do also result in reduced secondary losses in the event of post-fragmentation, arising out of large differential packet processing latency between post fragmented and non-post fragmented traffic. Further, there is an improved Out of Order Tolerance under certain bursty post fragmentation scenarios by employing a window of at least W and up to W+L.

Examples described herein may be used in the field of messaging using wired or wireless networks of arbitrary type. While Figs. 4 to 6 elaborate on an ARW scheme for the IPsec protocol, further examples are also applicable to other Layer 3⁺ protocols that apply anti-replay schemes and require software assist for completing the lower layer processing, e.g., an IP fragmentation or a segmentation protocol. Such security protocols may include DTLS (Datagram Transport Layer Security), TLS (Transport Layer security) etc. The upper layers depicted in this invention diagrams, may be residing within the Ethernet complex (in-line) or in software. While this document references the implementation as an in-line NIC cooperating with an adjoining host software, the concept is extensible to a smartNIC/IPU with an embedded compute complex.

Based on the previously described implementations, an implementation additionally disallowing the genuine (non-attack) rare network duplication that could happen in any network, the examples may be extended with additional filtering logic and be applicable to deployments with intermittent post-fragmentation, e.g. pMTU probes.

In such an extension algorithm, a hardware ARW would be tri-stated instead of a binary bit map. A newly introduced 3^{rd} state would represents a prior post fragmented traffic that has been admitted by the hardware filtering into the software. The supplemental window would be converted to a classic ARW binary bit map, where occupancy in the hardware window indicates an admittance by the hardware into the software.

A non-post fragmented traffic that has a SN of a prior post fragmented SN would first be fully processed in the hardware, including hardware ARW update. It would then be forwarded into the software to check for duplication against an admitted post-fragmented traffic.

In systems with software upper layers, the nominal traffic is subject to an additional check prior to continuing with the upper layer processing. It is to be noted that such a check is not stateful with respect to software ARW processing, does not pose software single SA scaling challenges and needs only a read-only view of the software window.

In summary, the examples described herein may provide for numerous benefits. The provide a feasible solution for splitting the anti-replay windows, splitting the stateful security protocol offload, into nominal and exception flows and enable a viable path to a full in-line security protocol offload for nominal flows. The improve the CPU availability by increased offload. Performance dynamically tracks the post fragmentation occurrence and not a static degradation. They are extensible to other Layer 3⁺ security protocols that support anti replay services and are susceptible to lower layer fragmentation/segmentation, e.g., DTLS.

The examples may further provide for reduced secondary losses. Independent windows for post fragmented and non-post fragmented subspaces result in packets visible to each window subject to similar processing latency. This increases the probability of a valid post processed packet being accepted successfully, as the window would not have been advanced by intermittent non-post fragmented arrivals.

The examples may further provide for increased Out of Order Tolerance. In the presence of large bursts of post-fragmentation, the algorithm can detect duplicates over a larger window than the minimum W requirement, and as a result can admit valid packets with a larger out of order tolerance.

With minimal incremental hardware cost, a security protocol offload solution developed for controlled environments (no post fragmentation and EtE network management ownership) can be extended to uncontrolled environments with post fragmentation. This is achieved through the hierarchical Anti-Replay Window design. Extensions may be applied by introducing of an additional state variable to track the supplemental window. Further, a subset of the full protocol offload logic may be applied to the first fragment of the post-fragmented traffic.

In the following, some examples of the proposed concept are presented:
An example (e.g., example 1) relates to a method for processing data of a security protocol, the method comprising receiving a data packet associated to the security protocol over a network, determining, whether the data packet belongs to a group of post fragmented, PF, packets, processing the content of the data packet according to the security protocol if the data packet does not belong to the group of post fragmented packets, and forwarding the data packet if the data packet does belong to the group of post fragmented packets.

Another example (e.g., example 2) relates to a previous example (e.g., example 1) or to any other example, further comprising that the security protocol implements at least one of encryption or authentication.

Another example (e.g., example 3) relates to a previous example (e.g., one of the examples 1 or 2) or to any other example, further comprising that the security protocol is at least one of IPsec, TLS or DTLS.

Another example (e.g., example 4) relates to a previous example (e.g., one of the examples 1 to 3) or to any other example, further comprising dropping the data packet, if an identical data packet (PF and non PF) was already received within a Standard Anti Replay Window, ARW.

Another example (e.g., example 5) relates to a previous example (e.g., one of the examples 1 to 4) or to any other example, further comprising dropping the data packet if the data packet belongs to a group of post fragmented packets and if the data packet is outside an allowable extended ARW, the extended ARW being the Standard ARW extended by a supplemental ARW.

Another example (e.g., example 6) relates to a previous example (e.g., example 5) or to any other example, further comprising Increasing the supplemental ARW to include the data packet if the data packet is inside of the allowable extended ARW.

Another example (e.g., example 7) relates to a previous example (e.g., one of the examples 1 to 6) or to any other example, further comprising that the data packet belonging to the group of post fragmented packets are forwarded for stateful processing using a further entity.

Another example (e.g., example 8) relates to a previous example (e.g., example 7) or to any other example, further comprising that the further entity comprises circuitry configured to drop the data packet belonging to the group of post fragmented packets if an identical data packet was already received within the extended ARW or within a preceding post frage-mented data packet.

An example (e.g., example 9) relates to an apparatus for processing data of a security protocol, comprising interface circuitry, memory for storing machine-readable instructions, and processing circuitry for executing the machine-readable instructions to receive a data packet associated to the security protocol over a network, determine, whether the data packet belongs to a group of post fragmented, PF, packets, process the content of the data packet according to the security protocol if the data packet does not belong to the group of post fragmented packets, and forwarding the data packet if the data packet does belong to the group of post fragmented packets.

Another example (e.g., example 10) relates to a previous example (e.g., example 9) or to any other example, further comprising that the security protocol implements at least one of encryption or authentication.

Another example (e.g., example 11) relates to a previous example (e.g., one of the examples 9 or 10) or to any other example, further comprising that the security protocol is at least one of IPsec, TLS or DTLS.

Another example (e.g., example 12) relates to a previous example (e.g., one of the examples 9 to 11) or to any other example, further comprising that the circuitry is further configured to drop the data packet, if an identical data packet was already received within a Standard Anti Replay Window, ARW.

Another example (e.g., example 13) relates to a previous example (e.g., one of the examples 9 to 12) or to any other example, further comprising that the circuitry is further configured to drop the data packet if the data packet belongs to a group of post fragmented packets and if the data packet is outside an allowable extended ARW, the extended ARW being the Standard ARW extended by a supplemental ARW.

Another example (e.g., example 14) relates to a previous example (e.g., example 13) or to any other example, further comprising that the circuitry is further configured to increase the supplemental ARW to include the data packet if the data packet is inside of the allowable extended ARW.

Another example (e.g., example 15) relates to a previous example (e.g., one of the examples 9 to 14) or to any other example, further comprising that the circuitry is further configured to forward the data packet belonging to the group of post fragmented packets for stateful processing using a further entity.

Another example (e.g., example 16) relates to network interface Card (NIC) comprising an apparatus according to a previous example (e.g., one of examples 9 to 15).

An example (e.g., example 17) relates to a computer readable storage medium having stored thereon a program code for performing method for processing data of a security protocol when the computer program is executed on a computer or processor, the method comprising receiving a data packet associated to the security protocol over a network, determining, whether the data packet belongs to a group of post fragmented, PF, packets, processing the content of the data packet according to the security protocol if the data packet does not belong to the group of post fragmented packets, and forwarding the data packet if the data packet does belong to the group of post fragmented packets. 18. The computer readable storage medium of example 17, wherein the security protocol implements at least one of encryption or authentication.

An example (e.g., example 19) relates to a previous example (e.g., one of the examples 17 or 18) or to any other example, wherein the security protocol is at least one of IPsec, TLS or DTLS.

Another example (e.g., example 20) relates to the method further comprising dropping the data packet, if an identical data packet (PF and non PF) was already received within a Standard Anti Replay Window, ARW.

The aspects and features described in relation to a particular one of the previous examples may also be combined with one or more of the further examples to replace an identical or similar feature of that further example or to additionally introduce the features into the further example.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and sub combinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

## Claims

1. A method for processing data of a security protocol, the method comprising:
receiving a data packet associated to the security protocol over a network;
determining, whether the data packet belongs to a group of post fragmented, PF, packets;
processing the content of the data packet according to the security protocol if the data packet does not belong to the group of post fragmented packets; and
forwarding the data packet if the data packet does belong to the group of post fragmented packets.

2. The method of claim 1, wherein the security protocol implements at least one of encryption or authentication.

3. The method of claim 1 or 2, wherein the security protocol is at least one of IPsec, TLS or DTLS.

4. The method of any one of claims 1 to 3, further comprising:
dropping the data packet, if an identical data packet (PF and non PF) was already received within a Standard Anti Replay Window, ARW.

5. The method of any one of claims 1 to 4, further comprising:
dropping the data packet if the data packet belongs to a group of post fragmented packets and if the data packet is outside an allowable extended ARW, the extended ARW being the Standard ARW extended by a supplemental ARW.

6. The method of claim 5, further comprising:
Increasing the supplemental ARW to include the data packet if the data packet is inside of the allowable extended ARW.

7. The method of any one of claims 1 to 6, wherein the data packet belonging to the group of post fragmented packets are forwarded for stateful processing using a further entity.

8. The method of claim 7, wherein the further entity comprises circuitry configured to drop the data packet belonging to the group of post fragmented packets if an identical data packet was already received within the extended ARW or within a preceding post frage-mented data packet.

9. An apparatus for processing data of a security protocol, comprising:
interface circuitry;
memory for storing machine-readable instructions; and
processing circuitry for executing the machine-readable instructions to:
receive a data packet associated to the security protocol over a network;
determine, whether the data packet belongs to a group of post fragmented, PF, packets;
process the content of the data packet according to the security protocol if the data packet does not belong to the group of post fragmented packets; and
forwarding the data packet if the data packet does belong to the group of post fragmented packets.

10. The apparatus of claim 9, wherein the security protocol implements at least one of encryption or authentication.

11. The apparatus of claim 9 or 10, wherein the security protocol is at least one of IPsec, TLS or DTLS.

12. The apparatus of any one of claims 9 to 11, wherein the circuitry is further configured to:
drop the data packet, if an identical data packet was already received within a Standard Anti Replay Window, ARW.

13. The apparatus of any one of claims 9 to 12, wherein the circuitry is further configured to:
drop the data packet if the data packet belongs to a group of post fragmented packets and if the data packet is outside an allowable extended ARW, the extended ARW being the Standard ARW extended by a supplemental ARW.

14. The apparatus of claim 13, wherein the circuitry is further configured to:
increase the supplemental ARW to include the data packet if the data packet is inside of the allowable extended ARW.

15. A computer readable storage medium having stored thereon a program code for performing method for processing data of a security protocol when the computer program is executed on a computer or processor, the method comprising:
receiving a data packet associated to the security protocol over a network;
determining, whether the data packet belongs to a group of post fragmented, PF, packets;
processing the content of the data packet according to the security protocol if the data packet does not belong to the group of post fragmented packets; and
forwarding the data packet if the data packet does belong to the group of post fragmented packets.
